Europäisches Patentamt

European Patent Office

Office européen des brevets

(11) Publication number: **0 099 327**
**B1**

# (12) EUROPEAN PATENT SPECIFICATION

(45) Date of publication of patent specification: **04.02.87**

(21) Application number: **83730068.0**

(22) Date of filing: **05.07.83**

(51) Int. Cl.⁴: **B 29 C 35/02**

(54) Tire vulcanizing press.

(30) Priority: **13.07.82 JP 121572/82**
**14.07.82 JP 122606/82**
**22.07.82 JP 127847/82**

(43) Date of publication of application:
**25.01.84 Bulletin 84/04**

(45) Publication of the grant of the patent:
**04.02.87 Bulletin 87/06**

(84) Designated Contracting States:
**DE FR GB IT NL**

(56) References cited:
**DE-A-2 531 383**
**US-A-3 870 443**
**US-A-4 130 384**
**US-A-4 212 605**

(73) Proprietor: **MITSUBISHI JUKOGYO KABUSHIKI KAISHA**
**5-1, Marunouchi 2-chome Chiyoda-ku**
**Tokyo (JP)**

(72) Inventor: **Hanyu, Takaomi Nagasaki Shipyard &**
**Engine Works**
**Mitsubishi Jukogyo K.K. 1-1, Akunoura-machi**
**Nagasaki City Nagasaki Pref. (JP)**
Inventor: **Irie, Nobuhiko Nagasaki Shipyard &**
**Engine Works**
**Mitsubishi Jukogyo K.K. 1-1, Akunoura-machi**
**Nagasaki City Nagasaki Pref. (JP)**
Inventor: **Hasegawa, Akira Nagasaki Shipyard &**
**Engine Works**
**Mitsubishi Jukogyo K.K. 1-1, Akunoura-machi**
**Nagasaki City Nagasaki Pref. (JP)**
Inventor: **Muta, Teruaki Nagasaki Shipyard &**
**Engine Works**
**Mitsubishi Jukogyo K.K. 1-1, Akunoura-machi**
**Nagasaki City Nagasaki Pref. (JP)**
Inventor: **Sakaguchi, Katsuyoshi Nagasaki**
**Shipyard & Engine**
**Works Mitsubishi Jukogyo K.K. 1-1, Akunoura-**
**machi**
**Nagasaki City Nagasaki Pref. (JP)**

Courier Press, Leamington Spa, England.

**0 099 327**

(72) Inventor: **Ikeda, Toshihisa Nagasaki Shipyard & Engine Works Mitsubishi Jukogyo K.K. 1-1, Akunoura-machi Nagasaki City Nagasaki Pref. (JP)**
Inventor: **Itayama, Yoshiharu Nagasaki Shipyard & Engine Works Mitsubishi Jukogyo K.K. 1-1, Akunoura-machi Nagasaki City Nagasaki Pref. (JP)**
Inventor: **Nakahara, Akira Nagasaki Shipyard & Engine Works Mitsubishi Jukogyo K.K. 1-1, Akunoura-machi Nagasaki City Nagasaki Pref. (JP)**

(74) Representative: **Meissner, Peter E., Dipl.-Ing. et al Herbertstrasse 22 D-1000 Berlin 33 (DE)**

## Description

The present invention relates to a tire vulcanizing press according to the precharacterizing part of the claim. US—A—3 870 443 discloses such a press which allows reactive force to occur at both right and left sides of the metal mold against pressing force.

Another hitherto known hydraulic tire vulcanizing press is generally constructed so that a raising and lowering table has a working stroke of about 1,000 mm in case of tires for passenger car or about 2,000 mm in case of tires for truck, bus or the like vehicle so as to allow a green tire to be vulcanized to be loaded on the lower die half and therefore a hydraulic cylinder for tightly closing both the die halves is designed to have a correspondingly long working stroke. Accordingly, when there occurs pressure reduction due to leakage of hydraulic oil from packings in the hydraulic line of the vulcanizing press during tire vulcanizing, there is fear of causing an amount of die opening between both the die halves to exceed the specified limitative value, resulting in an occurrence of leakage of vulcanizing medium (steam, high pressure and temperature water, high pressure and temperature gas or the like) from the interior of the die. To take remedial activity against malfunctions as described above there have been already made various proposals. One of them is to employ expensive components such as breach lock ring or the like means and another one is to mount a hydraulic control device or the like adapted to be actuated by means of a pressure switch. However, it has been found that all these proposals fail to function properly as means for minimizing an amount of die opening between both the die halves.

Thus, the present invention has been made with the foregoing problems in mind and its object resides in providing an improved tire vulcanizing press which assures uniform pressure with the minimized die opening by means of mechanical arrangement.

Other object of the present invention is to provide an improved vulcanizing press in which vulcanizing operation is carried out safely.

Another object of the present invention is to provide an improved vulcanizing press which can be manufactured at an inexpensive manufacturing cost.

To accomplish the above objects there is proposed in accordance with the invention a tire vulcanizing press of the early mentioned type which is characterized in that the vertically extending means consists of a single column coaxial with the axial line of the dies and the press cylinder means consist of a single press cylinder secured to the bottom of said upper frame and in that the press cylinder has a coaxial through hole for the column. These characterizing features of the invention asssure that vulcanizing operation is carried out with a tightly closed die onto which depressing force is transmitted from the working cylinder via the distance plate, the vertically extending member and the raising and lowering table. Since the vertically extending member and the distance plate are arranged between the upper frame and the raising and lowering table, the working cylinder can be designed to have a very short working stroke by which required depressing force can be reliably transmitted to the die without any fear of exceeding a certain die opening specified for assuring safe vulcanizing operation. Thus, any excessively wide die opening can be reliably prevented by means of a combination of the distance plate and the vertically extending member, when there occurs pressure reduction in the working cylinder due to failure, injury or the like. As a result vulcanizing medium does not leak from the interior of the die. Further, since the working cylinder is designed to have a very short working stroke owing to the arrangement of the vertically extending member and the distance plate as described above, tight closing can be precisely achieved for the die within a very short period of time.

The accompanying drawings will be briefly described below.

Fig. 1 is a partially sectioned front view of a tire vulcanizing press in accordance with the embodiment of the invention.

Fig. 2 is a plan view of the tire vulcanizing press in Fig. 1.

Now, the present invention will be described in a greater detail hereunder with reference to the accompanying drawings which illustrate a preferred embodiment of the invention.

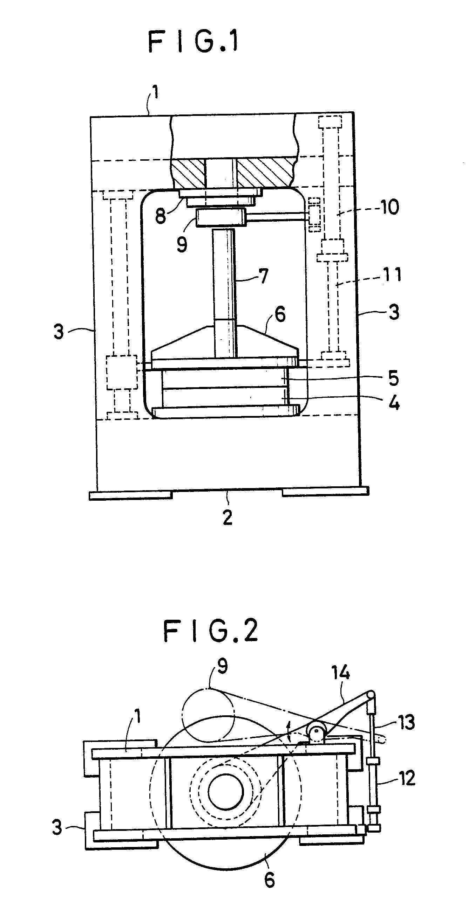

Description will be made as to the embodiment as illustrated in Figs. 1 and 2.

A vulcanizing press includes an upper frame 1 and a lower frame 2 both of which are integrally connected to one another by way of side frames 3 so that a lower die half 4 constituting a part of a die is firmly mounted on said lower frame 2 and an upper die half 5 constituting another part of the same is fixedly secured to a raising and lowering table 6. The latter has a vertically extending member 7 fixedly connected thereto and the upper die half 5 is adapted to move up away from the lower die half 4.

A working cylinder (press cylinder) 8 and a distance plate 9 are arranged between the upper frame 1 and the vertically extending member 7 of the raising and lowering table 6 so that depressing force given by the working cylinder 8 is transmitted to the die by way of the distance plate 9, the vertically extending member 7 and the raising and lowering table 6. The working cylinder 8 is fixedly secured to the upper frame 1 at the predetermined position, for instance, at the lower side thereof and the central part of the working cylinder 8 has the configuration of a doughnut with a through hole formed therein. The through hole at the central part of the working cylinder 8 has an inner diameter which is dimensioned larger than the outer diameter of the vertically extending member 7 on the raising and lowering table 6 and moreover the fitting portion of the working cylinder 8 located at the upper frame side is also formed with a through hole. The distance plate 9 has an outer diameter which is dimensioned larger than the inner diameter of the through hole of the working press 8 and it is turnably supported from the upper frame 1 or the side frame 3 as illustrated in Fig. 2 so that it moves reciprocably between the first position located outward of the vulcanizing press and the second position located inward of the same.

The vulcanizing press is constructed in the above-described manner so that a green tire to be vulcanized is loaded on the lower die half 4 by means of a green tire loading device (not shown) and an assembly of the raising and lowering table 6, the thermal insulating plate, the upper hot plate and the upper die half 5 is then caused to move down by allowing a rod 11 of the auxiliary hydraulic cylinder 10 to expand downward until said assembly is placed on the lower die half 4. Next, as a hydraulic or pneumatic cylinder 12 is actuated so as to allow its rod 13 to expand outward as illustrated in Fig. 2, the distance plate 9 is displaced from the first position located outward of the vulcanizing press to the second position located inward of the same and thereby it is disposed between the vertically extending member 7 on the lowered table 6 and the working cylinder 8. As the working cylinder 8 is then actuated by hydraulic pressure so as to allow the rod 11 to expand downward, the upper die half 5 is tightly depressed on the lower die half 4 by way of the distance plate 9, the vertically extending member 7 and the raising and lowering table 6.

Next, removal of a vulcanized tire from the vulcanizing press is carried out in such a manner as described below. The rod 11 of the working cylinder 8 is first raised up and the rod 13 of the cylinder 12 is then caused to contract. The distance plate 9 is horizontally displaced by means of a link 14 operatively connected to the rod 13 from the second position where it is located below the working cylinder 8 as illustrated in Fig. 2 to the first position located outward of the vulcanizing press and thereafter the rod 11 of the auxiliary cylinder 10 is retracted so that the upper die half 5 is displaced upward together with the raising and lowering table 6. Now, a vulcanized tire is ready to be removed from the lower die half 4.

Since the vulcanizing press of the invention is constructed in the above-described manner, it is assured that the distance plate 9 is correctly located between the uppermost end of the vertically extending member 7 on the raising and lowering table 6 and the lowermost end of the rod of the working cylinder 8 before a green tire is vulcanized while the raising and lowering table 6 is kept lowered. Further, a stroke of the working cylinder 8 can be determined to such a very short working stroke that required depressing force is transmitted to the die. Thus, both the upper and lower die halves 4 and 5 can be tightly closed within a very short period of time by means of the distance plate 9, the vertically extending member 7 and the raising and lowering table 6 by operating the working cylinder 8. Moreover, since the working cylinder 8 is designed to have a very short working stroke, it is possible to confine die opening between both the upper and lower die halves 4 and 5 within an allowable extent when there occurs decrease in hydraulic pressure due to malfunction, failure or the like.

**Claim**

A tire vulcanizing press of the type including an upper frame (1), a lower frame (2) and side frames (3) by way of which said upper frame (1) and said lower frame (2) are integrally connected to one another, wherein a raising and lowering table (6) has a vertically extending means (7) fixedly mounted thereon, a press cylinder means (8) is provided and distance means (9) is disposed between the upper frame (1) and the vertically extending means (7) in such a manner as to be displaced away from the operative position to the inoperative position and vice versa, characterized in that the vertically extending means (7) consists of a single column coaxial with the axial line of the dies (4, 5) and the press cylinder means consist of a single press cylinder (8) secured to the bottom of said upper frame (1) and in that the press cylinder (8) has a coaxial through hole for the column (7).

**Patentanspruch**

Reifenvukanisierpresse mit einem oberen Rahmen (1), einem unteren Rahmen (2) und Seitenrahmen (3), durch die der obere Rahmen (1) und der untere Rahmen (2) zusammenhängend miteinander verbunden sind, wobei ein Hebe- und Senktisch (6) ein daran befestigtes senkrecht verlaufendes Glied (7), eine Preß- oder Druckwalze (8) und Abstandsglieder (9) zwischen dem oberen Rahmen (1) und dem senkrecht verlaufenden Glied (7) aufweist, die derart angeordnet sind, daß sie von der Betriebsstellung weg zur Außerbetriebsstellung hin und umgekehrt verschiebbar sind, dadurch gekennzeichnet, daß das senkrecht verlaufende Glied (7) gebildet ist aus einer Einzelsäule, die mit der Axiallinie der Gesenke (4, 5) koaxial liegt, daß die Preß- oder Druckwalze (8) aus einer Einzeldruckwalze besteht, die am Boden des oberen Rahmens (1) befestigt ist, und daß die Druckwalze (8) eine koaxiale Durchgangsbohrung für die Säule (7) besitzt.

**Revendication**

Presse de vulcanisation de pneus du type comportant un cadre supérieur (1), un cadre inférieur (2) et des cadres latéraux 3 grâce auxquels ledit cadre supérieur (1) et ledit cadre inférieur (2) sont reliés l'un à l'autre de façon ingégrale, dans laquelle une table (6) pouvant se lever et s'abaisser présente des moyens s'étendant verticlement (7) montés de façon fixe sur celle-ci, des moyens (8) formant cylindre de presse sont prévus et des moyens d'écartement (9) sont disposés entre le cadre supérieur (1) et les moyens s'étendant verticalement (7) de façon telle qu'ils peuvent être écartés d'une position de travail vers une position de repos, et vice versa, caractérisée en ce que les moyens (7) s'étandant verticalement sont constitués d'une colonne unique coaxiale à la ligne axiale des moules (4, 5), et en ce que les moyens formant cylindre de presse sont constitués d'un cylindre de presse unique (8) fixé au fond dudit cadre supérieur (1), et en ce que le cylindre de presse (8) présente un trou traversant coaxial pour la colonne (7).

# F I G.1

# F I G.2